# FASCICULE DE BREVET EUROPEEN

(11) **EP 2 721 682 B1**
(45) Date de publication et mention de la délivrance du brevet: **09.09.2015**
(21) Numéro de dépôt: 12731523.2
(22) Date de dépôt: 13.06.2012
(51) Int. Cl.: H01M 10/0569, H01M 10/0568, H01M 10/0525, H01M 6/16, H01M 4/50, H01M 4/58, H01M 4/587

(54) **ELECTROLYTE LIQUIDE POUR BATTERIE AU LITHIUM, COMPRENANT UN MÉLANGE QUATERNAIRE DE SOLVANTS ORGANIQUES NON-AQUEUX**
FLÜSSIGER ELEKTROLYT FÜR LITHIUMBATTERIE UMFASSEND EINE QUATERNÄRE MISCHUNG AUS NICHT-WÄSSRIGEN ORGANISCHEN LÖSUNGSMITTELN
LIQUID ELECTROLYTE FOR A LITHIUM BATTERY, COMPRISING A QUATERNARY MIXTURE OF NON-AQUEOUS ORGANIC SOLVENTS

(30) Priorité: 14.06.2011 FR 1101813
(43) Date de publication de la demande: 23.04.2014
(73) Titulaire: Commissariat à l'Énergie Atomique et aux Énergies Alternatives, 75015 Paris (FR)
(72) Inventeur: GIROUD, Nelly, F-42100 Saint Etienne (FR); ROUAULT, Hélène, F-38420 Le Versoud (FR); ROUILLON, Florence, F-38250 Villard-de-Lans (FR)
(74) Mandataire: Talbot, Alexandre
(86) Numéro de dépôt international: PCT/FR2012/000241
(87) Numéro de publication internationale: WO 2012/172194

(56) Documents cités:
- EP-A1- 0 980 108
- US-A1- 2005 164 094
- US-A1- 2010 216 035
- US-B1- 6 492 064

## Description

### Domaine technique de l'invention

L'invention concerne un électrolyte liquide pour batterie au lithium comprenant un sel de lithium dissous dans un mélange quaternaire de solvants organiques non aqueux.

### État de la technique

De manière générale, le domaine technique de l'invention peut être défini comme celui de la formulation des électrolytes, et plus précisément comme celui de la formulation des électrolytes liquides, c'est-à-dire des solutions comprenant un solvant liquide et un soluté tel qu'un sel conducteur, où des mécanismes de conduction ionique sont mis en jeu.

Les batteries au lithium sont généralement constituées par une cellule électrochimique ou un empilement de cellules électrochimiques dans un emballage. Chaque cellule électrochimique est formée par une électrode positive et une électrode négative séparées par un électrolyte.

Il existe deux sortes de batterie au lithium :
- la batterie primaire ou batterie lithium métal dans laquelle l'électrode négative est composée de lithium métallique et
- la batterie secondaire dans laquelle le lithium reste à l'état ionique et qui fonctionne sur le principe d'insertion ou de désinsertion (ou intercalation-désintercalation) du lithium dans le matériau actif de l'électrode positive et de l'électrode négative.

Les batteries au lithium comportent classiquement des collecteurs de courant assurant la circulation des électrons, et donc la conduction électronique, dans le circuit extérieur de la batterie au lithium.

En outre, les batteries au lithium conventionnelles comportent un séparateur imprégné par l'électrolyte liquide disposé entre les électrodes positive et négative. Le séparateur empêche tout court-circuit en évitant la mise en contact de l'électrode positive avec l'électrode négative.

Les électrolytes employés dans les batteries au lithium actuelles sont des électrolytes liquides constitués d'un mélange de solvants organiques, non aqueux, le plus souvent des carbonates, dans lequel est dissous un sel de lithium.

La formulation de l'électrolyte utilisé revêt un caractère essentiel pour la performance des batteries au lithium, en particulier, lorsque celles-ci sont utilisées à des températures très basses ou très élevées. La conductivité de l'électrolyte conditionne notamment les performances de la batterie au lithium car elle intervient sur la mobilité des ions lithium au sein de l'électrolyte entre les électrodes positive et négative.

D'autres paramètres interviennent également dans le choix du type d'électrolyte utilisé dans une batterie au lithium. Il s'agit notamment de sa stabilité thermique, chimique et électrochimique au sein de la batterie ainsi que des critères économiques, de sécurité et de respect de l'environnement incluant notamment la toxicité de l'électrolyte liquide.

À l'heure actuelle, les électrolytes de batterie au lithium fonctionnent sur une plage de température réduite, comprise classiquement entre -10°C et 50°C, sans être endommagés. Au-delà de cette plage de température, l'électrolyte se dégrade et entraîne une détérioration significative des performances de la batterie au lithium.

De nombreux travaux ont été décrits pour proposer d'élargir la plage de fonctionnement des batteries au lithium, en particulier, en modifiant la formulation de l'électrolyte.

Ainsi, il a été montré que l'utilisation de solvants tels que les esters simples, les diesters ou les carbonates améliore significativement les performances de la batterie au lithium à haute ou basse température.

Le tableau représenté ci-dessous regroupe, les principaux solvants utilisés dans les batteries au lithium ainsi que leurs propriétés physico-chimiques. Les données répertoriées dans le tableau sont issues de la littérature, en particulier, des publications Vincent 2000 : C.A. Vincent, Solid State Ionics, 134, 159 (2000) ; Hayashi 1999 : K. Hayashi, Y. Nemoto, S.-I. Tobishima, J.-I. Yamachi, Electrochimica Acta, 44, 2337 (1999) ; Smart 1999 : M.C. Smart, B.V. Ratnakumar, S. Surampudi, J. Electrochem. Soc., 146 (2), 486 (1999) et Xu 2004 : K. Xu, Chem. Rev., 104, 4303 (2004).

| Solvant | Structure | M g.mol⁻¹ | T*ₘ* (°C) | T*_{b}* (°C) | T*_{f}* (°C) | *η* (cP) | *ε*ᵣ | *µ* (D) | *ρ* (g.cm⁻³) |
|---|---|---|---|---|---|---|---|---|---|
| Acétonitrile (AN) | CH₃-CN | | -45,7 | 81,8 | | 0,345 | 38,0 | 3,94 | |
| γ-butyrolactone (GBL) | 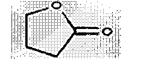 | 86 | -43,5 | 204 | 97 | 1,73 | 39 | 4,23 | 1,199 |
| Diméthylether (DMM) | 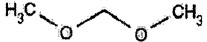 | 76 | -105 | 41 | -17 | 0,33 | 2,7 | 2,41 | 0,86 |
| 1,2-Diméthoxyéthane (DME) | 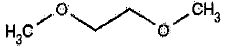 | 90 | -58 | 84 | 0 | 0,46 | 7,2 | 1,15 | 0,86 |
| Diéthoxyéthane (DEE) | 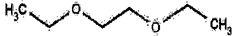 | 118 | -74 | 121 | 20 | 0,224 | 4,3 | 1,18 | 0,84 |
| Tétrahydrofurane (THF) | 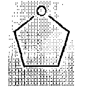 | 72 | -109 | 66 | -17 | 0,46 | 7,4 | 1,7 | 0,88 |
| 1,3-dioxalane (1,3-DL) | 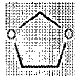 | 74 | -95 | 78 | 1 | 0,59 | 7,1 | 1,25 | 1,06 |
| Carbonate d'éthylène (EC) | 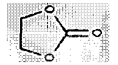 | 88 | 36,4 | 248 | 160 | 1,90 (40°C) | 89,78 | 4,61 | 1,321 |
| Carbonate de propylène (PC) | 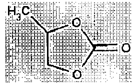 | 102 | -48,8 | 242 | 132 | 2,53 | 64,92 | 4,81 | 1,200 |
| Carbonate de diméthyle (DMC) | 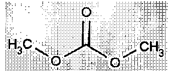 | 90 | 4,6 | 91 | 18 | 0,59 (20°C) | 3,107 | 0,76 | 1,063 |
| Carbonate de diéthyle (DEC) | 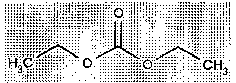 | 118 | -74,3 | 126 | 31 | 0,75 | 2,805 | 0,96 | 0,969 |
| Ethyle méthyle carbonate (EMC) | 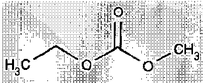 | 104 | -53 | 110 | - | 0,65 | 2,958 | 0,89 | 1,006 |

### Propriétés physico-chimiques de solvants à 25°C, M : masse molaire en g.mol⁻¹, Tₘ : température de fusion, T_{b}: température d'ébullition, T_{f}: température flash, εᵣ: permittivité relative, η : viscosité dynamique, µ: moment dipolaire, ρ : masse massique.

Plusieurs documents de l'art antérieur proposent des électrolytes composés d'un mélange de solvants organiques dans lequel est dissous un sel de lithium.

En particulier, le document EP-A-980108 décrit un électrolyte fonctionnant à basse température à base d'un mélange quaternaire contenant uniquement des solvants carbonates, en particulier, le mélange EC/DMC/EMC/DEC. L'utilisation de cet électrolyte au sein d'un batterie au lithium permet son utilisation à une température inférieure à -20°C tout en maintenant de bonnes performances à température ambiante.

Les documents US 2010/216035, US 2005/164094, US 6 492 064 décrivent différentes compositions d'électrolytes comprenant, respectivement, les mélanges de solvants : EC/DEC/EMC/PC, EC et/ou PC/DEC/EMC/VC, EC/DMC/DEC avec éventuellement EMC comme solvant additionnel.

En outre, on trouve actuellement dans le commerce des formulations d'électrolyte liquide employées pour les batteries au lithium primaires, notamment, convenant pour une électrode positive en dioxyde de manganèse, de formule chimique MnO₂. Par exemple, l'électrolyte liquide commercialisé par la société NOVOLYTE ou SAFT ou MERCK sous le nom commercial LP40 est constitué par un sel de lithium LiPF6 à une concentration de 1 mol.L⁻¹ dissous dans un mélange binaire de solvants organiques non aqueux, EC/DEC dans un rapport volumique respectivement de 1/1.

### Objet de l'invention

L'invention a pour but de proposer un nouvel électrolyte liquide stable thermiquement dans une large gamme de température et son utilisation dans une batterie au lithium. L'invention a, en particulier, pour objet un nouvel électrolyte liquide ayant une conductivité ionique élevée, à la fois à haute et basse température et convenant, indifféremment, aux batteries primaires et secondaires.

L'invention a également pour but un électrolyte liquide apte à activer et maintenir les propriétés électrochimiques d'un batterie au lithium dans une large gamme de température, notamment, à une température inférieure ou égale à -20°C et supérieure ou égale à 55°C.

On tend vers cet objet par les revendications annexées.

### Description sommaire des dessins :

D'autres avantages et caractéristiques ressortiront plus clairement de la description qui va suivre de modes particuliers de réalisation de l'invention donnés à titre d'exemples non limitatifs et représentés au dessin unique annexé, dans lesquels :

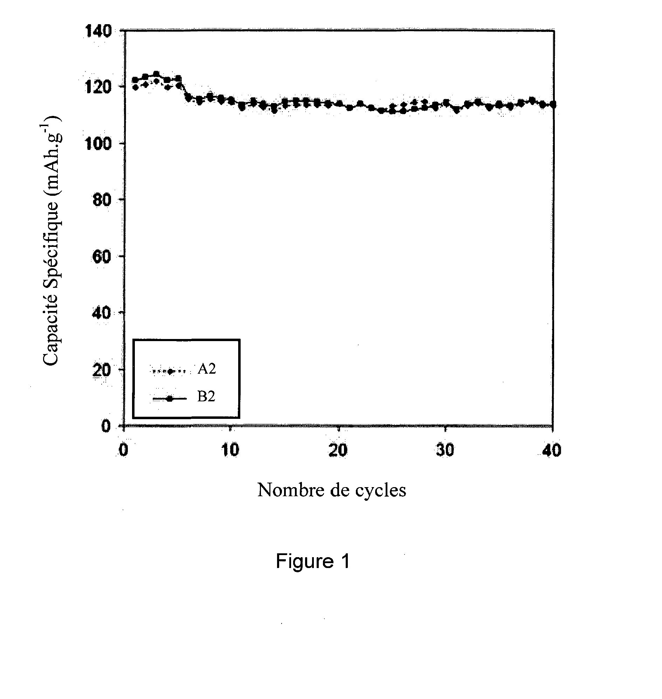

La figure 1 représente deux courbes de cyclage à une température de -20°C, de deux piles bouton LiFePO₄// C_{gr}, notées A2 et B2, réalisées à partir d'une solution d'électrolyte de formulation EC/DEC/THF/EMC (1/1/1/3) + LiClO₄ 1 M (A2) selon un mode de réalisation particulier de l'invention et EC/DEC/THF/EMC (1/1/1/3) + LiPF₆ 1M (B2).

### Description de modes particuliers de réalisation

Un électrolyte liquide pour batterie au lithium comprend un sel de lithium dissous dans un mélange quaternaire de solvants organiques non aqueux.

Quatre solvants organiques non aqueux particuliers, ainsi que la nature du sel de lithium, ont été choisis pour former le mélange de solvants organiques de l'électrolyte liquide pour batterie au lithium. On entend par solvant organique un solvant non aqueux apte à améliorer la conduction ionique de l'électrolyte en favorisant la dissociation des ions formant le sel de lithium.

Le sel de lithium est du perchlorate de lithium, de formule chimique LiClO₄.

Le mélange quaternaire de solvants organiques est constitué par :
- du carbonate d'éthylène, également connu sous l'acronyme anglo-saxon EC,
- du carbonate de diéthyle, également connu sous l'acronyme anglo-saxon DEC,
- du tétrahydrofurane, également connu sous l'acronyme anglo-saxon THF et,
- de l'éthyle méthyle carbonate, également connu sous l'acronyme anglo-saxon EMC.

Les solvants organiques utilisés pour former le mélange quaternaire sont des solvants organiques commerciaux qui peuvent contenir jusqu'à 1% d'impuretés. Néanmoins, on choisira de préférence des solvants organiques ayant une pureté supérieure à 99,8%.

La somme des pourcentages massiques respectifs de carbonate d'éthylène, carbonate de diéthyle, tétrahydrofurane et éthyle méthyle carbonate dans le mélange est égale à 100%. Ainsi, le mélange quaternaire de solvants organiques ne comporte pas, avantageusement, d'autre(s) solvant(s) que les quatre solvants EC, DEC, THF et EMC. Plus particulièrement, il ne comporte pas de carbonate de diméthyle (DMC) comme dans les exemples de mélanges de solvants divulgués selon l'art antérieur.

Comme montré dans la suite de la description, la sélection spécifique de LiClO₄ parmi l'ensemble des sels de lithium en combinaison avec le mélange quaternaire EC/DEC/THF/EMC induit un effet inattendu sur la stabilité thermique, à la fois à haute et basse température, de l'électrolyte liquide utilisé dans une batterie au lithium.

En particulier, il a été constaté de façon surprenante que l'électrolyte liquide constitué uniquement par du perchlorate de lithium (LiClO₄) dissous dans le mélange quaternaire a des propriétés physico-chimiques particulièrement adaptées à une utilisation dans une batterie au lithium, notamment, une batterie au lithium primaire.

Selon un mode de réalisation particulier de l'invention, le mélange quaternaire de solvants organiques contient, de préférence, entre :
- 0,5% et 33% massique de carbonate d'éthylène (EC),
- 0,5% et 33% massique de carbonate de diéthyle (DEC),
- 0,5% et 33% massique de tétrahydrofurane (THF) et,
- 1,5% et 98,5% massique l'éthyle méthyle carbonate (EMC).

Le mélange quaternaire contient, de préférence, au moins 5% massique de chacun des solvants organiques.
Selon un mode de réalisation particulier de l'invention, le mélange quaternaire de solvants organiques contient, de préférence, entre :
- 10% et 30% massique de carbonate d'éthylène (EC),
- 10% et 30% massique de carbonate de diéthyle (DEC),
- 10% et 30% massique de tétrahydrofurane (THF) et,
- 10% et 70% massique l'éthyle méthyle carbonate (EMC).

Selon un mode de réalisation particulier préférentiel, le mélange quaternaire est un mélange carbonate d'éthylène /carbonate de diéthyle/ tétrahydrofurane/ éthyle méthyle carbonate, noté EC/DEC/THF/EMC, dans un rapport massique, respectivement, de 1/1/1/3. On entend par rapport massique 1/1/1/3 un mélange quaternaire de solvants organiques, non aqueux, qui contient 50/3 % massique de propylène carbonate, 50/3 % massique de carbonate de diéthyle, et 50/3 % massique de tétrahydrofurane et 50% massique d'éthyle méthyle carbonate.

Le rapport massique de chaque solvant organique dans le mélange quaternaire permet d'améliorer les propriétés conductrices ioniques et de solvatation du sel de lithium ainsi que la tenue de l'électrolyte liquide dans une large de température, en particulier, pour une gamme de températures comprise entre -20°C et 55°C.

Pour permettre d'obtenir une dissociation optimale des ions constituant le sel LiClO₄ dans le mélange quaternaire de solvants organiques décrit ci-dessus et favoriser ainsi les transfert du cation Li⁺, on choisira avantageusement une concentration en sel de lithium LiClO₄ comprise entre 0,1 mol.L⁻¹ et 6 mol.L⁻¹, de préférence, égale à 1 mol.L⁻¹ ± 0,2.

La formulation particulière de l'électrolyte liquide tel que décrit ci-dessus présente des propriétés physiques et chimiques particulièrement adaptée à l'utilisation dans une batterie au lithium.

L'électrolyte liquide est, avantageusement, utilisé pour une batterie au lithium pouvant fonctionner dans une gamme de température comprise entre -20°C et 55°C.

Selon un mode de réalisation particulier de l'invention, l'électrolyte liquide est particulièrement adapté pour une batterie au lithium comportant :
- une électrode positive comprenant un matériau actif positif,
- une électrode négative comprenant un matériau actif négatif,
- et un séparateur disposé entre les électrodes positive et négative et imbibé de l'électrolyte.

L'électrolyte liquide peut être utilisé dans une batterie au lithium primaire. Le matériau actif négatif est du lithium métal et le matériau actif positif est, avantageusement, choisi parmi MnO₂ et NiO₂. Le matériau actif positif est, de préférence, du MnO₂.

Alternativement, l'électrolyte liquide peut être utilisé dans une batterie au lithium secondaire. Pour une batterie au lithium secondaire, on choisira préférentiellement un matériau actif négatif parmi le carbone graphite (C_{gr}), Li₄Ti₅O₁₂, le silicium et le carbure de silicium.

De même, le matériau actif positif est, avantageusement, choisi parmi LiFePO₄, LiNi_{0.33}Mn_{0.33}Co_{0.33}O₂, LiNiₓCo_{y}Al_{z}O₂ avec la somme des valeurs de x, y et z étant égale à 1, LiMnO₂, LiNiO₂ et LiNiₓMn_{y}O₄ avec x compris entre 0.4 et 0.5 et y compris entre 1,5 et 1,6.

Selon un mode de réalisation particulier préférentiel, pour une batterie au lithium secondaire, le matériau actif positif est du LiFePO₄ et le matériau actif négatif est du carbone graphite (C_{gr}).

Le séparateur peut classiquement être une membrane poreuse en composite ou céramique, ou microporeuse en polymère, par exemple, à base de polyoléfine(s). Le séparateur peut également être constitué par des fibres de verre non-tissées, noyées dans un polymère pour renforcer leur stabilité mécanique très faible.

Le séparateur est imprégné par l'électrolyte liquide tel que décrit ci-dessus.

L'électrolyte liquide permet de réaliser un batterie au lithium délivrant une puissance élevée à des régimes de courant élevés, tout en ayant une faible autodécharge dans une large gamme de température, notamment pour des températures extrêmement basses et extrêmement élevées. La batterie au lithium réalisée à partir de l'électrolyte liquide selon l'invention peut ainsi fonctionner sur une large plage de températures, de préférence, comprise entre -20°C et +55°C et, plus avantageusement, entre -40°C et +60°C. Par autodécharge, on entend l'aptitude d'une batterie placée à l'état chargé à se décharger, même lorsqu'il n'est pas utilisé ou «sur étagère».

Pour mettre en évidence l'effet du sel de lithium LiClO₄ sur les performances électriques d'une batterie au lithium, une série de tests électrochimiques ont été réalisés sur deux batteries au lithium primaire MnO₂//Liₘₑₜ. qui diffèrent uniquement par la nature du sel de lithium utilisé dans l'électrolyte liquide (exemples comparatifs 1). De même, une série de tests électrochimiques ont été réalisés sur deux batteries au lithium secondaire LiFePO₄//C_{gr} qui diffèrent uniquement par la nature du sel de lithium utilisé dans l'électrolyte liquide (exemples comparatifs 2).

### Exemples comparatifs 1

Une batterie au lithium primaire, notée A1, de type pile bouton est réalisée à partir du couple de matériaux actifs MnO₂//Liₘₑₜ. correspondant, respectivement, à l'électrode positive et l'électrode négative.

En particulier, une électrode positive MnO₂ est formée en déposant sur un collecteur de courant en aluminium, le mélange suivant :
- 94% massique de matériau actif MnO₂,
- 5% massique de graphite SFG6 commercialisé par la société Timcal comme matériau conducteur électronique et,
- 1% massique de polytétrafluoroéthylène (PTFE) à 60% massique dans l'eau comme liant.

L'électrolyte liquide est constitué par du LiClO₄ dissous dans un mélange binaire de solvants organiques LP40 commercialisé par la société Merck. Le mélange binaire, noté mₐ₁, est un mélange EC/DEC avec un rapport volumique 1/1. La quantité de LiClO₄ ajoutée dans le mélange binaire est ajustée pour obtenir une solution d'électrolyte liquide avec une concentration en LiClO₄ de 1mol.L⁻¹.

Un séparateur de type Celgard 2400® est imbibé par l'électrolyte liquide ainsi formé et disposé entre les électrodes positive et négative, respectivement, MnO₂//Li_{met.}.

À titre de comparaison, une batterie au lithium, appelée B1 a également été réalisée et diffère de la batterie au lithium A1 uniquement par le fait que le sel de lithium LiClO₄ est remplacé par du LiPF6.

Une série de tests en cyclage sur banc ARBIN modèle BT200 de la société ARBIN Instruments est réalisée à température ambiante sur chaque batterie au lithium A1 et B1, en décharge à des régimes de C/50 et C/100.

Les résultats des batteries au lithium A1et B1 sont répertoriés dans le tableau 1 suivant :

**Tableau 1**

| Réf. | Régime de décharge C50 | | Régime de décharge C100 | |
|---|---|---|---|---|
| | Capacité de décharge (Ah.g⁻¹) | Capacité de décharge / capacité théorique (en %) | Capacité de décharge (Ah.g⁻¹) | Capacité de décharge / capacité théorique (en %) |
| A1 | 0,144 | 96 | 0,148 | 98,6 |
| B1 | 0,052 | 34,6 | 0,08 | 53 |

Les résultats montrent clairement de meilleurs résultats pour la batterie au lithium A1 comparativement à B1.

### Exemples comparatifs 2

Une batterie au lithium, noté A2, de type pile bouton est réalisée à partir du couple de matériaux actifs LiFePO₄//C_{gr} correspondant, respectivement, à l'électrode positive et l'électrode négative.

En particulier, une électrode positive LiFePO₄ est formée en déposant sur un collecteur de courant en aluminium, le mélange suivant :
- 90% massique de matériau actif LiFePO₄,
- 4% massique de noir de carbone utilisé comme matériau conducteur et,
- 6% massique de polyfluorure de vinylidène (PVdF) comme liant.

En particulier, une électrode négative C_{gr} est formée en déposant sur un collecteur de courant en cuivre, le mélange suivant :
- 96% massique de matériau actif constitués de 75 % de matériau carbone graphite, 19-20% de fibres (tenax) et 6-5 % de noir de carbone,
- 2% massique de carboxyméthylcellulose utilisé comme épaississant et liant d'électrodes et,
- 2% massique de nitrile butadiene rubber (NBR) utilisé comme élastomère.

L'électrolyte liquide est constitué par du sel de lithium LiClO₄ dissous dans un mélange quaternaire de solvants organiques, noté mₐ₂, constitué par les solvants organiques, non aqueux, EC/DEC/THF/EMC dans un rapport massique 1/1/1/3. La quantité de LiClO₄ ajoutée dans le mélange binaire est ajustée pour obtenir une solution d'électrolyte liquide avec une concentration en LiClO₄ de 1mol.L⁻¹.

Un séparateur de type Celgard 2400® est imbibé par l'électrolyte liquide ainsi formé et disposé entre les électrodes positive et négative, respectivement, LiFePO₄//C_{gr}.

À titre de comparaison, une batterie au lithium, appelée B2 a également été réalisée et diffère de la batterie au lithium A2 uniquement par le fait que le sel de lithium LiClO₄ est remplacé par du LiPF6.

Une série de tests en cyclage sur banc ARBIN modèle BT200 de la société ARBIN Instruments est réalisé à une température de -20°C sur chaque batterie au lithium A2 et B2, selon le protocole de cyclage suivant :
- 2 cycles de formations en régimes C/20-D/20 à température ambiante,
- 5 cycles de charge et décharge en régime C/20-D/20 à -20°C,
- 100 cycles en régime de charge et décharge en régime C/10-D/10 à -20°C.

Les résultats sont représentés à la figure 1 sous forme d'un graphe représentant la capacité spécifique en fonction du nombre de cycle.

Comme représenté à la figure 1, on constate que les résultats obtenus pour A2 et B2 sont comparables, avec des capacités spécifiques récupérées moyennes de 113 mAh.g⁻¹ et 114 mAh.g⁻¹, respectivement, pour LiClO₄ et LiPF₆. Comparativement à la capacité spécifique théorique du matériau LiFePO₄, on obtient une valeur correspond à 80,7 % pour LiClO₄ et 81,4% pour LiPF₆ de capacité restituée, à une température de -20°C, en régime C/10-D/10. La batterie au lithium A2 fonctionne aussi bien que la batterie au lithium B2 à une température très basse de -20°C. Les résultats obtenus confirment que l'électrolyte liquide peut être utilisé pour une batterie au lithium secondaire à basse température de l'ordre de -20°C, voire très basse de l'ordre de -40°C à -60°C.

Afin de mettre en évidence l'effet de la formulation du mélange quaternaire de solvants organiques de l'électrolyte liquide selon l'invention sur les performances électriques et la stabilité thermique des batteries au lithium, d'autres séries de tests ont été également réalisées avec différentes formulations dans des conditions identiques.

Des batteries au lithium primaires MnO₂//Liₘₑₜ., notées A3, B3 et B4, ont été réalisées à partir de trois mélanges de solvants organiques non aqueux différents, notés m_{A3}, m_{B3} et m_{B4}. A l'exception du mélange de solvants organiques constituant l'électrolyte liquide, les batteries au lithium A3, B3 et B4 sont identiques et ont été fabriquées selon le même mode opératoire que la batterie au lithium A1 décrite précédemment.

Les formulations des trois mélanges de solvants organiques m_{A3}, m_{B3} et m_{B4} sont répertoriées dans le tableau 2 suivant :

**Tableau 2**

| **Batterie au lithium** | **Mélange** | **Solvants organiques du mélange** | **Rapport massique des solvants** |
|---|---|---|---|
| A3 | m_{A3} | **EC/DEC/THF/EMC** | 1 / 1 / 1 / 3 |
| B3 | m_{B3} | **PC/DEE/THF** | 1 / 1 / 1 |
| B4 | m_{B4} | **PC/ DME** | 1 / 1 |

Une série de tests en décharge à des régimes de C50 et C100 a été effectuée sur chaque batterie au lithium A3, B3 et B4, à des températures de -20°C, -15°C, 37°C et 55°C.

Les moyennes des capacités spécifiques récupérées en décharge, notées C_{d} et les valeurs du rapport R correspondant à capacité spécifique de décharge/capacité théorique attendue, notées C_{T}, ont été évaluées à différentes températures.

Si, à haute température (37°C et 55°C), les batteries A3, B3 et B4 fournissent une capacité spécifique identique de l'ordre de la capacité théorique attendue, il n'en est pas de même à basse température.

Comme illustré par les résultats répertoriés dans les tableaux 3 et 4 ci-après, la batterie A3 présentent effectivement de meilleurs résultats à -20°C et à-15°C.

**Tableau 3 : Température de -20°C**

| Référence | Régime de décharge C100 | |
|---|---|---|
| | C_{d} (Ah.g⁻¹) | C_{d} / C_{T} (en %) (en %) |
| A3 | 59,1 | 39,4 |
| B3 | 37,8 | 25,2 |
| B4 | 0 | 0 |

**Tableau 4 : Température de -15°C**

| Référence | Régime de décharge C100 | |
|---|---|---|
| | C_{d} (Ah.g⁻¹) | C_{d}/C_{T} (en %) (en %) |
| A3 | 75 | 50 |
| B3 | 67 | 44,6 |
| B4 | 0 | 0 |

L'utilisation du mélange m_{A3} permet d'obtenir de façon surprenante des capacités spécifiques récupérées à basse température nettement supérieures aux deux autres mélanges m_{B3} et m_{B4}.

L'électrolyte liquide selon l'invention présente de bonnes propriétés physico-chimiques dans une large gamme de température le rendant particulièrement intéressant pour une utilisation dans une batterie au lithium.

La batterie au lithium comportant un électrolyte selon l'invention est remarquable en ce qu'il présente une tenue à basse température améliorée tout en maintenant une capacité spécifique élevée à haute température.

Par ailleurs, l'électrolyte liquide selon l'invention est intéressant industriellement car il peut être utilisé à la fois pour des batteries au lithium primaires et secondaires.

## Revendications

1. Electrolyte liquide pour batterie au lithium comprenant un sel de lithium dissous dans un mélange quaternaire de solvants organiques non aqueux, **caractérisé en ce que** le sel de lithium est du perchlorate de lithium (LiClO₄) et **en ce que** le mélange quaternaire est constitué par du carbonate d'éthylène (EC), du carbonate de diéthyle (DEC), du tétrahydrofurane (THF) et de l'éthyle méthyle carbonate (EMC).

2. Electrolyte selon la revendication 1, **caractérisé en ce qu'**il est constitué par du perchlorate de lithium (LiClO₄) dissous dans le mélange quaternaire.

3. Electrolyte selon l'une des revendications 1 et 2, **caractérisé en ce que** le mélange quaternaire contient au moins 5% massique de chacun des solvants organiques.

4. Electrolyte selon la revendication 3, **caractérisé en ce qu'**il contient entre :
- 10% et 30% massique de carbonate d'éthylène (EC),
- 10% et 30% massique de carbonate de diéthyle (DEC),
- 10% et 30% massique de tétrahydrofurane (THF) et,
- 10% et 70% massique l'éthyle méthyle carbonate (EMC).

5. Electrolyte selon l'une quelconque des revendications 1 à 4, **caractérisé en ce que** le mélange quaternaire est un mélange carbonate d'éthylène /carbonate de diéthyle/ tétrahydrofurane/ éthyle méthyle carbonate (EC/DEC/THF/EMC), dans un rapport massique, respectivement, de 1/1/1/3.

6. Electrolyte selon l'une quelconque des revendications 1 à 5, **caractérisé en ce que** la concentration en sel de lithium LiClO₄ est comprise entre 0,1 mol.L⁻¹ et 6 mol.L⁻¹, de préférence, égale à 1 mol.L⁻¹ ± 0,2.

7. Utilisation d'un électrolyte liquide selon l'une quelconque des revendications 1 à 6, dans une batterie au lithium.

8. Utilisation selon la revendication 7, **caractérisée en ce que** la batterie au lithium comporte :
- une électrode positive comprenant un matériau actif positif,
- une électrode négative comprenant un matériau actif négatif,
- et un séparateur disposé entre les électrodes positive et négative et imbibé de l'électrolyte.

9. Utilisation selon la revendication 8, **caractérisée en ce que** le matériau actif négatif est du lithium métal.

10. Utilisation selon la revendication 9, **caractérisée en ce que** le matériau actif positif est choisi parmi MnO₂ et NiO₂.

11. Utilisation selon la revendication 10, **caractérisée en ce que** le matériau actif positif est du MnO₂.

12. Utilisation selon la revendication 8, **caractérisée en ce que** le matériau actif négatif est choisi parmi le carbone graphite (C_{gr}), Li₄Ti₅O₁₂, le silicium et le carbure de silicium.

13. Utilisation selon la revendication 12, **caractérisée en ce que** le matériau actif positif est choisi parmi LiFePO₄, LiNi_{0.33}Mn_{0.33}Co_{0.33}O₂, LiNiₓCo_{y}Al_{z}O₂ avec la somme des valeurs de x, y et z étant égale à 1, LiMnO₂, LiNiO₂ et LiNiₓMn_{y}O₄ avec x compris entre 0.4 et 0.5 et y compris entre 1,5 et 1,6.

14. Utilisation selon l'une des revendications 12 et 13, **caractérisée en ce que** le matériau actif positif est du LiFePO₄ et le matériau actif négatif est du carbone graphite (C_{gr}).

## Patentansprüche

1. Flüssiger Elektrolyt für eine Lithium-Batterie, der ein Lithiumsalz enthält, das in einer quaterinären Mischung von nicht-wässrigen organischen Lösungsmitteln gelöst ist,
**dadurch gekennzeichnet,**
**dass** das Lithiumsalz Lithium-Perchlorat (LiClO₄) ist und dass die quaternäre Mischung aus Ethylencarbonat (EC), Diethylcarbonat (DEC), Tetrahydrofuran (THF) und Ethyl-Methylkarbonat (EMC) besteht.

2. Elektrolyt nach Anspruch 1,
**dadurch gekennzeichnet,**
**dass** er aus Lithium-Perchlorat (LiClO₄) gebildet ist, das in der quaterinären Mischung gelöst ist.

3. Elektrolyt nach einem der Ansprüche 1 und 2,
**dadurch gekennzeichnet,**
**dass** die quaternäre Mischung mindestens 5 % Masseanteile von jedem der organischen Lösungsmittel enthält.

4. Elektrolyt nach Anspruch 3,
**dadurch gekennzeichnet,**
**dass** er enthält:
- 10 % bis 30 % Masseanteile Ethylencarbonat (EC),
- 10 % bis 30 % Masseanteile Diethylcarbonat (DEC),
- 10 % bis 30 % Masseanteile Tetrahydrofuran (THF) und
- 10 % bis 70 % Masseanteile Ethyl-Methylkarbonat (EMC).

5. Elektrolyt nach einem der Ansprüche 1 bis 4,
**dadurch gekennzeichnet,**
**dass** die quaterinäre Mischung eine Ethylencarbonat-/ Diethylcarbonat-/ Tetrahydrofuran-/ Ethyl-Methylkarbonat-Mischung (FC/DEC/THF/EMC) in einem Massenverhältnis von 1/1/1/3 ist.

6. Elektrolyt nach einem der Ansprüche 1 bis 5,
**dadurch gekennzeichnet,**
**dass** die Konzentration an Lithiumsalz LiClO₄ zwischen 0,1 Mol.L⁻¹ und 6 Mol.L⁻¹ beträgt, vorzugsweise gleich 1 Mol.L⁻¹± 0,2 ist.

7. Verwendung eines flüssigen Elektrolyts nach einem der Ansprüche 1 bis 6 in einer Lithium-Batterie.

8. Verwendung nach Anspruch 7,
**dadurch gekennzeichnet,**
**dass** die Lithium-Batterie enthält:
- eine positive Elektrode, die ein positives aktives Material aufweist,
- eine negative Elektrode, die ein negatives aktives Material aufweist,
- und einen Separator, der zwischen der positiven und der negativen Elektrode angeordnet ist und mit dem Elektrolyt getränkt ist.

9. Verwendung nach Anspruch 8,
**dadurch gekennzeichnet,**
**dass** es sich bei dem negativen aktiven Material um Lithium-Metall handelt.

10. Verwendung nach Anspruch 9,
**dadurch gekennzeichnet,**
**dass** das positive aktive Material unter MnO₂ und NiO₂ gewählt ist.

11. Verwendung nach Anspruch 10,
**dadurch gekennzeichnet,**
**dass** es sich bei dem positiven aktiven Material um MnO₂ handelt.

12. Verwendung nach Anspruch 8,
**dadurch gekennzeichnet,**
**dass** das negative aktive Material unter Graphitkohlenstoff (C_{gr}), Li₄Ti₅O₁₂, Silizium und Siliziumkarbid gewählt ist.

13. Verwendung nach Anspruch 12,
**dadurch gekennzeichnet,**
**dass** das positive aktive Material unter LiFePO₄, LiNi_{0,33}Mn_{0,33}Co_{0,33}O₂, LiNiₓCo_{y}Al₂O₂, wobei die Summe der Werte x, y und z gleich 1 sind, LiMnO₂, LiNiO₂ und LiNiₓMn_{y}O₄, wobei x 0,4 bis 0,5 beträgt und y 1,5 bis 1,6 beträgt, gewählt ist.

14. Verwendung nach einem der Ansprüche 12 und 13,
**dadurch gekennzeichnet,**
**dass** es sich bei dem positiven aktiven Material um LiFePO₄ handelt und bei dem negativen aktiven Material um Graphitkohlenstoff (C_{gr}) handelt.

## Claims

1. A liquid electrolyte for a lithium battery comprising a lithium salt dissolved in a quaternary mixture of non-aqueous organic solvents, **characterized in that** the lithium salt is lithium perchlorate (LiClO₄) and **in that** the quaternary mixture is constituted by ethylene carbonate (EC), diethyl carbonate (DEC), tetrahydrofurane (THF) and ethyl methyl carbonate (EMC).

2. The electrolyte according to claim 1, **characterized in that** it is constituted by lithium perchlorate (LiClO₄) dissaived in the quaternary mixture.

3. The electrolyte according to one of claims 1 and 2, **characterized in that** the quaternary mixture contains at least 5% by mass of each of the organic solvents.

4. The electrolyte according to claim 3, **characterized in that** it contains between:
- 10% and 30% by mass of ethylene carbonate (EC),
- 10% and 30% by mass of diethyl carbonate (DEC),
- 10% and 30% by mass of tetrahydrofurane (THF) and,
- 10% and 70% by mass of ethyl methyl carbonate (EMC).

5. The electrolyte according to any one of claims 1 to 4, **characterized in that** the quaternary mixture is an ethylene carbonate/ diethyl carbonate/ tetrahydrofurane/ ethyl methyl carbonate (EC/DEC/THF/EMC) mixture, in a mass ratio respectively of 1/1/1/3.

6. The electrolyte according to any one of claims 1 to 5, **characterized in that** the concentration of LiClO₄ lithium salt is comprised between 0.1 mol.L⁻¹ and 6 mol.L⁻¹, preferably equal to 1 mol.L⁻¹ ± 0.2.

7. The use of a liquid electrolyte according to any one of claims 1 to 6, in a lithium battery.

8. The use according to claim 7, **characterized in that** the lithium battery comprises:
- a positive electrode comprising a positive active material,
- a negative electrode comprising a negative active material,
- and a separator arranged between the positive and negative electrodes and imbibed with the electrolyte.

9. The use according to claim 8, **characterized in that** the negative active material is metal lithium.

10. The use according to claim 9, **characterized in that** the positive active material is chosen from MnO₂ and NiO₂.

11. The use according to claim 10, **characterized in that** the positive active material is MnO₂.

12. The use according to claim 8, **characterized in that** the negative active material is chosen from carbon graphite (C_{gr}), Li₄Ti₅O₁₂, silicon and silicon carbide.

13. The use according to claim 12, **characterized in that** the positive active material is chosen from LiFePO₄, LiNi_{0.33}Mn_{0.33}Co_{0.33}O₂, LiNiₓCo_{y}Al_{z}O₂ with the sum of the values of x, y and z being equal to 1, LiMnO₂, LiNiO₂ and LiNiₓMn_{y}O₄ with x comprised between 0.4 and 0.5 and y comprised between 1.5 and 1.6.

14. The use according to one of claims 12 and 13, **characterized in that** the positive active material is LiFePO₄ and the negative active material is carbon graphite (C_{gr}).
